# EUROPEAN PATENT SPECIFICATION

(11) **EP 3 051 949 B1**
(45) Date of publication and mention of the grant of the patent: **04.12.2019**
(21) Application number: 14851184.3
(22) Date of filing: 01.10.2014
(51) Int. Cl.: A01N 43/16, A01N 53/00, A01N 25/08, C05D 9/00, C05F 11/00, C05G 3/02

(54) **COMPOSITIONS AND METHODS FOR IMPROVING PLANT GROWTH**
ZUSAMMENSETZUNGEN UND VERFAHREN ZUR VERBESSERUNG DES PFLANZENWACHSTUMS
COMPOSITIONS ET PROCÉDÉS POUR AMÉLIORER LA CROISSANCE VÉGÉTALE

(30) Priority: 04.10.2013 US 201361887113 P; 18.03.2014 US 201414217520
(43) Date of publication of application: 10.08.2016
(73) Proprietor: FMC Corporation, Philadelphia, PA 19104 (US)
(72) Inventor: MARTIN, Timothy M., Ringoes, NJ 08551 (US)
(74) Representative: Murgitroyd & Company
(86) International application number: PCT/US2014/058569
(87) International publication number: WO 2015/050951

(56) References cited:
- WO-A1-2006/124508
- WO-A1-2012/120105
- WO-A2-2009/049747
- US-A1- 2007 135 506
- US-A1- 2008 206 361

## Description

### FIELD OF THE INVENTION

The present invention is directed to compositions that include bifenthrin; at least one plant growth promoter; attapulgite; and a dispersant.

WO2006/124508A1 and WO2012/120105A1 may be useful to further understand the field of the present invention.

### BACKGROUND OF THE INVENTION

To enable the efficient elimination or control of unwanted insects in combination with providing nutrients for plants to combat adverse environmental conditions (heat, dry weather, physical contact with animals) it is desirable to formulate an effective chemical insecticide for use in preparation of insecticidal liquid fertilizers. Formulations of insecticides combined with fertilizers are desirable in agricultural and related endeavors due to the multiple benefits conveyed by just one application in a single piece of equipment. One application of such a combination or formulation provides nutrients for the plant growth, while eliminating or controlling unwanted insects that can also affect the health and vitality of the desirable plants.

### SUMMARY OF THE INVENTION

The present invention provides a composition according to claim 1 that includes: bifenthrin; at least one plant growth promoter; attapulgite; and a dispersant consisting of a lignosulfonate, tridecyl alcohol ethoxylated phosphate potassium salt and an alkylpolyglycoside.

In some embodiments, the composition includes: from 15% to 25% of bifenthrin; from 15% to 25% of at least one plant growth promoter; from 1% to 20% of attapulgite; and from 0.2% to 20% of the dispersant; wherein all % are % by weight based upon the total weight of all components in the composition.

In some embodiments, the plant growth promoter is a lipo-chitooligosaccharide. In other embodiments, the plant growth promoter is formononetin.

Some embodiments further include a liquid fertilizer.

Other embodiments further include at least one of an anti-freeze agent, an anti-foam agent and a biocide.

Some embodiments provide a method of improving the growth of a plant by applying a plant growth effective amount of the composition defined herein to plant propagation material. In some embodiments, the plant propagation material is selected from seeds, spores, bulbs, cuttings, sets, rhizomes, tubers, meristem tissue, plant cells, and combinations thereof. In some embodiments, the plant propagation material includes at least one seed. In other embodiments, the composition is applied at a rate ranging from 0.1g/ha to 1000gm/ha. In some embodiments, the plant is selected from corn, cotton, soybean, sunflower, wheat, barley, rye, oat, and oilseed rape.

### DETAILED DESCRIPTION OF THE INVENTION

The present invention is directed to compositions that include bifenthrin; at least one plant growth promoter; attapulgite; and a dispersant consisting of a lignosulfonate, tridecyl alcohol ethoxylated phosphate potassium salt and an alkylpolyglycoside. The dispersant or dispersants are preferably present in a total concentration of from 0.2% by weight to 20% by weight based upon the total weight of all components in the composition.

The modifier "about" is used herein to indicate that certain preferred operating ranges, such as ranges for molar ratios for reactants, material amounts, and temperature, are not fixedly determined. The meaning will often be apparent to one of ordinary skill. For example, a recitation of a temperature range of about 120°C to about 135°C in reference to, for example, an organic chemical reaction would be interpreted to include other like temperatures that can be expected to favor a useful reaction rate for the reaction, such as 105°C or 150°C. Where guidance from the experience of those of ordinary skill is lacking, guidance from the context is lacking, and where a more specific rule is not recited below, the "about" range shall be not more than 10% of the absolute value of an end point or 10% of the range recited, whichever is less.

As is employed herein the term "plant growth promoter" refers to a composition which will increase the growth and or vigor of the plant to an extent exceeding that of identical plants not treated with the plant growth promoter.

As is employed herein, the term "plant growth effective amount" refers to an amount of a composition which will increase the growth and or vigor of the plant to an extent exceeding that of identical plants not treated with the composition. It is preferred that the rate of application of the composition be in the range of from about 0.1 gram of active per hectare (g ai/ha) to about 1000 g ai/ha, more preferably in a range of from about 1 g ai/ha to about 100 g ai/ha.

As is employed herein the term "plant propagation material" includes plant seeds, spores, bulbs, cuttings (e.g. stems, roots, leaves, and the like), sets, rhizomes, tubers, meristem tissue, single and multiple plant cells, and any other plant tissue from which a complete plant can be obtained.

The improved plant growth obtained employing the compositions and methods of this invention include increased root length, increased shoot length and increased seedling weight, relative to plants which have not been so treated.

As is employed herein, the term "plants" includes agricultural, silvicultural and horticultural (including ornamental) plants. The term "plants" also includes genetically modified plants in which genetic material has been modified by the use of recombinant DNA techniques. Such techniques permit modifications that cannot readily be obtained by natural breeding or mutagenesis, such as, for example, cross-breeding under natural circumstances, natural mutations or natural recombination.

Preferred plants which may be treated with the compositions and in the processes of this invention include, but are not limited to, barley; brassicas, such as broccoli, Chinese broccoli, Brussels sprouts, cauliflower, Cavalo broccoli, kohlrabi, cabbage, Chinese cabbage and Chinese mustard cabbage; cilantro; coriander; corn, cucurbits, such as chayote, Chinese waxgourd, citron melon, cucumber, gherkin, gourd, muskmelons (including cantalope, casaba, crenshaw melon, golden pershaw melon, honeydew melon, honey balls, mango melon, Persian melon, pineapple melon, Santa Claus melon and snake melon), pumpkins, summer squash, winter squash and watermelon; cotton plants; dried beans and peas, including bean, field bean, kidney bean, lima bean, pinto bean, navy bean, tepary bean, adzuki bean, fava bean, blackeyed pea, catjang, cowpea, crowder pea, moth bean, mung bean, rice bean, southern pea, urd bean, broad bean, chickpea, guar, lablab bean, lentil, pea, field pea and pigeon pea; eggplant; lettuce; leafy brassicas/turnip greens including broccoli raab, bok choy, collards, kale, mizuna, mustard spinach, rape greens and turnip greens; oats; oilseed rape; okra; peppers; rapeseed; rye; sod; soybeans; spinach; succulent peas and beans including pea, dwarf pea, edible-pod pea, English pea, garden pea, green pea, snow pea, sugar snap pea, pigeon pea, bean, broadbean, fava bean, lima bean, runner bean, snap bean, wax bean, asparagus bean, yardlong bean, jackbean and sword bean; sunflowers; tobacco; tomatoes; tuberous and corm vegetables including potato, sweet potato, arracacha, arrowroot, Chinese artichoke, Jerusalem artichoke, edible canna, cassava, chayote, chufa, dasheen, ginger, leren, tanier, turmer, yam bean and true yam; and wheat.

The composition according to the present invention may be applied to the propagative material by any means, including direct application, as a seed treatment, in furrow or band applications, by means well known to those skilled in the art.

The composition may further comprise an insecticidally or fungicidally effective amount of one or more additional insecticides or fungicides. Preferred additional insecticides are selected from group A and include:
A1) the class of carbamates consisting of aldicarb, alanycarb, benfuracarb, carbaryl, carbofuran, carbosulfan, methiocarb, methomyl, oxamyl, pirimicarb, propoxur and thiodicarb; or
A2) the class of organophosphates consisting of acephate, azinphos-ethyl, azinphos-methyl, chlorfenvinphos, chlorpyrifos, chlorpyrifos-methyl, demeton-S-methyl, diazinon, dichlorvos/DDVP, dicrotophos, dimethoate, disulfoton, ethion, fenitrothion, fenthion, isoxathion, malathion, methamidaphos, methidathion, mevinphos, monocrotophos, oxymethoate, oxydemeton-methyl, para- thion, parathion-methyl, phenthoate, phorate, phosalone, phosmet, phosphamidon, pirimiphos-methyl, quinalphos, terbufos, tetrachlor- vinphos, triazophos and trichlorfon;
A3) the class of cyclodiene organochlorine compounds such as endosulfan;
A4) the class of fiproles consisting of ethiprole, fipronil, pyrafluprole and pyriprole;
A5) the class of neonicotinoids consisting of acetamiprid, chlothianidin, dinotefuran, imidacloprid, nitenpyram, thiacloprid and thiamethoxam;
A6) the class of spinosyns such as spinosad and spinetoram;
A7) chloride channel activators from the class of mectins consisting of abamectin, emamectin benzoate, ivermectin, lepimectin and milbemectin;
A8) juvenile hormone mimics such as hydroprene, kinoprene, methoprene, fenoxycarb and pyriproxyfen;
A9) selective homopteran feeding blockers such as pymetrozine, flonicamid and pyrifluquinazon;
A10) mite growth inhibitors such as clofentezine, hexythiazox and etoxazole;
A11) inhibitors of mitochondrial ATP synthase such as diafenthiuron, fenbutatin oxide and propargite; uncouplers of oxidative phosphorylation such as chlorfenapyr;
A12) nicotinic acetylcholine receptor channel blockers such as bensultap, cartap hydrochloride, thiocyclam and thiosultap sodium;
A13) inhibitors of the chitin biosynthesis type 0 from the benzoylurea class consisting of bistrifluron, diflubenzuron, flufenoxuron, hexaflumuron, lufenuron, no- valuron and teflubenzuron;
A14) inhibitors of the chitin biosynthesis type 1 such as buprofezin;
A15) moulting disruptors such as cyromazine;
A16) ecdyson receptor agonists such as methoxyfenozide, tebufenozide, halofenozide and chromafenozide;
A17) octopamin receptor agonists such as amitraz;
A18) mitochondrial complex electron transport inhibitors pyridaben, tebufenpyrad, tolfenpyrad, flufenerim, cyenopyrafen, cyflumetofen, hydramethylnon, acequinocyl or fluacrypyrim;
A19) voltage-dependent sodium channel blockers such as indoxacarb and metaflumizone;
A20) inhibitors of the lipid synthesis such as spirodiclofen, spiromesifen and spirotetramat;
A21) ryanodine receptor-modulators from the class of diamides consisting of flubendiamide, the phthalamide compounds (R)-3-Chlor-N1-{2-methyl-4-[1,2,2,2-tetrafluor-1-(trifluormethyl)ethyl]phenyl}-N2-(1-methyl-2-methylsulfonylethyl)phthalamid and (S)-3-Chlor-N1-{2-methyl-4-[1,2,2,2-tetrafluor-1-(trifluormethyl)ethyl]phenyl}-N2-(1-methyl-2-methylsulfonylethyl)phthalamid, chloranthraniliprole and cy- anthraniliprole;
A22) compounds of unknown or uncertain mode of action such as azadirachtin, amidoflumet, bifenazate, fluensulfone, piperonyl butoxide, pyridalyl, sulfoxaflor.

Preferred additional fungicides are selected from group B and include:
B1) azoles selected from the group consisting of bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole, prochloraz, pefurazoate, imazalil, triflumizole, cyazofamid, benomyl, carbendazim, thia- bendazole, fuberidazole, ethaboxam, etridiazole and hymexazole, azaconazole, diniconazole-M, oxpoconazol, paclobutrazol, uniconazol, 1-(4-chloro-phenyl)-2-([1,2,4]triazol-1-yl)-cycloheptanol and imazalilsulfphate;
B2) strobilurins selected from the group consisting of azoxystrobin, dimoxy- strobin, enestroburin, fluoxastrobin, kresoxim-methyl, methominostrobin, orysastrobin, picoxystrobin, pyraclostrobin, trifloxystrobin, enestroburin, methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate and methyl 2-(ortho-(2,5-dimethylphenyloxymethylene)-phenyl)-3-methoxyacrylate, 2-(2-(6-(3-chloro-2-methyl-phenoxy)-5-fluoro-pyrimidin-4-yloxy)-phenyl)-2-methoxyimino-N-methylacetamide and 3-methoxy-2-(2-(N-(4-methoxy-phenyl)-cyclopropanecarboximidoylulfanylmethyl)-phenyl)-acrylic acid methyl ester;
B3) carboxamides selected from the group consisting of carboxin, benalaxyl, benalaxyl-M, fenhexamid, flutolanil, furametpyr, mepronil, metalaxyl, mefenoxam, ofurace, oxadixyl, oxycarboxin, penthiopyrad, isopyrazam, thifluzamide, tiadinil, 3,4-dichloro-N-(2-cyanophenyl)isothiazole-5-carboxamide, dimethomorph, flumorph, flumetover, fluopicolide (picobenzamid), zoxamide, carpropamid, diclocymet, mandipropamid, N-(2- (4-[3-(4-chlorophenyl)prop-2-ynyloxy]-3-methoxyphenyl)ethyl)-2-methanesulfonyl-amino-3-methylbutyramide, N-(2-(4-[3-(4-chloro- phenyl)prop-2-ynyloxy]-3-methoxy-phenyl)ethyl)-2-ethanesulfonylamino-3-methylbutyramide, methyl 3-(4-chlorophenyl)-3-(2-isopropoxycarbonyl- amino-3-methyl-butyrylamino)propionate, N-(4'-bromobiphenyl-2-yl)-4-difluoromethyl^-methylthiazole-δ-carboxamide, N-(4'-trifluoromethyl-biphenyl-2-yl)-4-difluoromethyl-2-methylthiazole-5-carboxamide, N-(4'-chloro-3'-fluorobiphenyl-2-yl)-4-difluoromethyl-2-methyl-thiazole-5-carboxamide, N-(3\4'-dichloro-4-fluorobiphenyl-2-yl)-3-difluoro-methyl-1-methyl-pyrazole-4-carboxamide, N-(3',4'-dichloro-5-fluorobiphenyl-2-yl)-3-difluoromethyl-1-methylpyrazole-4-carboxamide, N-(2-cyano-phenyl)- 3,4-dichloroisothiazole-5-carboxamide, 2-amino-4-methylthiazole-5-carboxanilide, 2-chloro-N-(1,1,3-trimethyl-indan-4-yl)-nicotinamide, N-(2-(1,3-dimethylbutyl)-phenyl)-1,3-dimethyl-5-fluoro-1H-pyrazole-4-carboxamide, N-(4'-chloro-3',5-difluoro-biphenyl-2-yl)-3-difluoromethyl-1-methyl-1H-pyrazole-4-carboxamide, N-(4'-chloro-3',5-difluoro-biphenyl-2-yl)-3-trifluoromethyl-1-methyl-1H-pyrazole-4-carboxamide, N-(3',4'-dichloro-5-fluoro-biphenyl-2-yl)-3-trifluoromethyl-1-methyl-1H-pyrazole-4-carboxamide, N-(3',5-difluoro-4'-methylbiphenyl-2-yl)-3-difluoromethyl-1-methyl-1H-pyrazole-4-carboxamide, N-(3',5-difluoro-4'-methyl-biphenyl-2-yl)-3-trifluoromethyl-1-methyl-1H-pyrazole-4-carboxamide, N-(cis-2-bicyclopropyl-2-yl-phenyl)-3-difluoromethyl-1-methyl-1H-pyrazole-4-carboxamide, N-(trans-2-bicyclopropyl-2-yl-phenyl)-3-difluoro-methyl-1-methyl-1H-pyrazole-4-carboxamide, fluopyram, N-(3-ethyl-3,5-5- trimethylcyclohexyl)-3-formylamino-2-hydroxy-benzamide, oxytetracyclin, silthiofam, N-(6-methoxy-pyridin-3-yl)cyclopropanecarboxamide, 2- iodo-N-phenyl-benzamide, N-(2-bicyclo-propyl-2-yl-phenyl)-3-difluormethyl-1-methylpyrazol-4-ylcarboxamide, N-(3',4',5'-trifluorobiphenyl-2-yl)-1,3-dimethylpyrazol-4-ylcarboxamide, N-(3',4',5'-trifluorobiphenyl-2-yl)-1,3-dimethyl-5-fluoropyrazol-4-yl-carboxamide, N-(3',4',5'-trifluorobiphenyl-2-yl)-5-chloro-1,3-dimethyl-pyrazol-4-ylcarboxamide, N-(3',4',5'-trifluorobiphenyl-2-yl)-3-fluoromethyl-1-methylpyrazol-4-ylcarboxamide, N-(3',4',5'-trifluorobiphenyl-2-yl)-3-(chlorofluoromethyl)-1-methylpyrazol-4-ylcarboxamide,N-(3',4',5'-trifluorobiphenyl-2-yl)-3-difluoromethyl-1-methylpyrazol-4- ylcarboxamide, N-(3',4',5'-trifluorobiphenyl-2-yl)-3-difluoromethyl-5-fluoro-1-methylpyrazol-4-ylcarboxamide, N-(3',4',5'-trifluorobiphenyl-2- yl)-5-chloro-3-difluoromethyl-1-methylpyrazol-4-ylcarboxamide, N-(3',4',5'-trifluorobiphenyl-2-yl)-3-(chlorodifluoromethyl)-1-methylpyrazol-4-ylcarboxamide, N-(3',4',5'-trifluorobiphenyl-2-yl)-1-methyl-3-trifluoromethylpyrazol-4-ylcarboxamide, N-(3',4',5'-trifluorobiphenyl-2-yl)-5-fluoro-1-methyl-3-trifluoromethylpyrazol-4-ylcarboxamide, N-(3',4',5'-trifluorobiphenyl-2-yl)-5-chloro-1-methyl-3-trifluoromethylpyrazol-4-ylcarboxamide, N-(2',4',5'-trifluorobiphenyl-2-yl)-1,3-dimethylpyrazol-4-ylcarboxamide, N-(2',4',5'-trifluorobiphenyl-2-yl)-1,3-dimethyl-5-fluoropyrazol-4-ylcarboxamide, N-(2',4',5'-trifluorobiphenyl-2-yl)-5-chloro-1,3-dimethylpyrazol-4-ylcarboxamide, N-(2',4',5'-trifluorobiphenyl-2-yl)-3-fluoromethyl-1-methylpyrazol-4-ylcarboxamide, N-(2',4',5'-trifluorobiphenyl-2-yl)-3-(chlorofluoromethyl)-1-methylpyrazol-4-ylcarboxamide,N-(2',4',5'-trifluorobiphenyl-2-yl)-3-difluoromethyl-1-methylpyrazol-4-ylcarboxamide, N-(2',4',5'-trifluorobiphenyl-2-yl)-3-difluoromethyl-5-fluoro-1-methylpyrazol-4-ylcarboxamide, N-(2',4',5'-trifluorobiphenyl-2-yl)-5-chloro-3-difluoromethyl-1-methylpyrazol-4-ylcarboxamide, N-(2',4',5'-trifluorobiphenyl-2-yl)-3-(chlorodifluoromethyl)-1-methylpyrazol-4-ylcarboxamide, N-(2',4',5'-trifluorobiphenyl-2-yl)-1-methyl-3-trifluoromethylpyrazol-4-ylcarboxamide, N-(2',4',5'-trifluorobiphenyl-2-yl)-5-fluoro-1-methyl-3-trifluoromethylpyrazol-4-ylcarboxamide, N-(2',4',5'-trifluorobiphenyl-2-yl)-5-chloro-1-methyl-3-trifluoromethylpyrazol-4-ylcarboxamide, N-(3',4'-dichloro-3-fluorobiphenyl-2-yl)-1-methyl-3-trifluoromethyl-1H-pyrazole-4-carboxamide, N-(3',4'-dichloro-3-fluorobiphenyl-2-yl)-1-methyl-3-difluoromethyl-1H-pyrazole-4-carboxamide, N-(3',4'-difluoro-3-fluorobiphenyl-2-yl)-1-methyl-3-trifluoromethyl-1H-pyrazole-4-carboxamide, N-(3',4'-difluoro-3-fluorobiphenyl-2-yl)-1-methyl-S-difluoromethyl-1 H-pyrazole-4-carboxamide, N-(3'-chloro-4'-fluoro-3-fluorobiphenyl-2-yl)-1-methyl-3-difluoromethyl-1H-pyrazole-4-carboxamide, N-(3',4'-dichloro-4-fluorobiphenyl-2-yl)-1-methyl-3-trifluoromethyl-1H-pyrazole-4-carboxamide, N-(3',4'-difluoro-4-fluorobiphenyl-2-yl)-1-methyl-S-trifluoromethyl-IH-pyrazole-4-carboxamide, N-(3',4'-dichloro-4-fluorobiphenyl-2-yl)-1-methyl-3-difluoromethyl-1H-pyrazole-4-carboxamide, N-(3',4'-difluoro-4-fluorobiphenyl-2-yl)-1-methyl-3-difluoromethyl-1 H-pyrazole-4-carboxamide, N-(3'-chloro-4'-fluoro-4-fluorobiphenyl-2-yl)-1-methyl-S-difluoromethyl-I H-pyrazole-carboxamide, N-(3',4'-dichloro-5- fluorobiphenyl-2-yl)-1-methyl-3-trifluoromethyl-1H-pyrazole-4-arboxamide, N-(3',4'-difluoro-5-fluorobiphenyl-2-yl)-1-methyl-3-trifluoromethyl-1H-pyrazole-4-carboxamide, N-(3',4'-dichloro-5-fluorobiphenyl-2-yl)-1-methyl-S-difluoromethyl-IH-pyrazole-carboxamide, N-(3',4'-difluoro-5-fluorobiphenyl-2-yl)-1-methyl-3-difluoromethyl-1 H-pyrazole-4-carboxamide, N-(3',4'-dichloro-5-fluorobiphenyl-2-yl)-1,3-dimethyl-1 H-pyrazole-4-carboxamide, N-(3'-chloro-4'-fluoro-5-fluorobiphenyl-2-yl)-1-methyl-3-difluoromethyl-1H-pyrazole-4-carboxamide, N-(4'-fluoro-4-fluorobiphenyl-2-yl)-1-methyl-3-trifluoromethyl-1H-pyrazole-4-carboxamide, N-(4'-fluoro- 5-fluorobiphenyl-2-yl)-1-methyl-3-trifluoromethyl-1H-pyrazole-4-carboxamide,N-(4'-chloro-5-fluorobiphenyl-2-yl)-1-methyl-3-trifluoromethyl-1H-pyrazole-4-carboxamide, N-(4'-methyl-5-fluorobiphenyl-2-yl)-1-methyl-3-trifluoromethyl-1H-pyrazole-4-carboxamide, N-(4'-fluoro-5-fluorobiphenyl-2-yl)-1,3-dimethyl-1H-pyrazole-4-carboxamide, N-(4'-chloro-5-fluorobiphenyl-2-yl)-1,3-dimethyl-1H-pyrazole-4-carboxamide, N-(4'-methyl-5-fluorobiphenyl-2-yl)-1,3-dimethyl-1H-pyrazole-4-carboxamide, N-(4'-fluoro-6-fluorobiphenyl-2-yl)-1-methyl-3-trifluoromethyl-1H-pyrazole-4-carboxamide, N-(4'-chloro-6-fluorobiphenyl-2-yl)-1-methyl-3-trifluoromethyl-1H-pyrazole-4-carboxamide, N-[2-(1,1,2,3,3,3-hexafluoropropoxy)-phenyl]-3-difluoromethyl-1-methyl-1H-pyrazole-4-carboxamide, N-[4'-(trifluoromethylthio)-biphenyl-2-yl]-3-difluoromethyl-1-methyl-1 H-pyrazole-4-carboxamide and N-[4'-(trifluoromethylthio)-biphenyl-2-yl]-1-methyl-3-trifluoromethyl-1-methyl-1H-pyrazole-4-carboxamide;
B4) heterocyclic compounds selected from the group consisting of fluazinam, pyrifenox, bupirimate, cyprodinil, fenarimol, ferimzone, mepanipyrim, nuarimol, pyrimethanil, triforine, fenpiclonil, fludioxonil, aldimorph, dodemorph, fenpropimorph, tridemorph, fenpropidin, iprodione, procymidone, vinclozolin, famoxadone, fenamidone, octhilinone, proben- azole, 5-chloro-7-(4-methyl-piperidin-1-yl)-6-(2,4,6-trifluorophenyl)-[1,2,4]triazolo[1,5-a]pyrimidine, anilazine, diclomezine, pyroquilon, proquinazid, tricyclazole, 2-butoxy-6-iodo-3-propylchromen-4-one, acibenzolar-S-methyl, captafol, captan, dazomet, folpet, fenoxanil, quinoxyfen, N,N-dimethyl-3-(3-bromo-6-fluoro-2-methylindole-1-sulfonyl)-[1,2,4]triazole-1-sulfonamide, 5-ethyl-6-octyl-[1,2,4]triazolo[1,5-a]pyrimidin-2,7-diamine, 2,3,5,6-tetrachloro-4-methanesulfonyl-pyridine, 3,4,5-trichloro-pyridine-2,6-di-carbonitrile, N-(1-(5-bromo-3-chloro-pyridin-2-yl)-ethyl)-2,4-dichloro-nicotinamide, N-((5-bromo-3-chloro pyridin-2-yl)-methyl)-2,4-dichloro-nicotinamide, diflumetorim, nitrapyrin, dodemorphacetate, fluoroimid, blasticidin-S, chinomethionat, debacarb, difenzoquat, difenzoquat-methylsulphat, oxolinic acid and piperalin;
B5) carbamates selected from the group consisting of mancozeb, maneb, metam, methasulphocarb, metiram, ferbam, propineb, thiram, zineb, ziram, diethofencarb, iprovalicarb, benthiavalicarb, propamocarb, propamocarb hydrochlorid, 4-fluorophenyl N-(1-(1-(4-cyanophenyl)- ethanesulfonyl)but-2-yl)carbamate, methyl 3-(4-chloro-phenyl)-3-(2-isopropoxycarbonylamino-3-methylbutyrylamino)propanoate;
B6) other fungicides selected from the group consisting of guanidine, dodine, dodine free base, iminoctadine, guazatine, antibiotics: kasugamycin, streptomycin, polyoxin, validamycin A, nitrophenyl derivatives: binapacryl, dinocap, dinobuton, sulfur-containing heterocyclyl compounds: dithianon, isoprothiolane, organometallic compounds: fentin salts, organophosphorus compounds: edifenphos, iprobenfos, fosetyl, fosetyl-aluminum, phosphorous acid and its salts, pyrazophos, tolclofos- methyl, organochlorine compounds: dichlofluanid, flusulfamide, hexachloro- benzene, phthalide, pencycuron, quintozene, thiophanate-methyl, tolylfluanid, inorganic active compounds: Bordeaux mixture, copper acetate, copper hydroxide, copper oxychloride, basic copper sulfate, sulfur, others: cyflufenamid, cymoxanil, dimethirimol, ethirimol, furalaxyl, metrafenone and spiroxamine, guazatine-acetate, iminoc- tadine-triacetate, iminoctadine-tris(albesilate), kasugamycin hydrochlorid-hydrat, dichlorophen, pentachlorophenol and its salts, N-(4- chloro-2-nitro-phenyl)-N-ethyl-4-methyl-benzenesulfonamide, dicloran, nitrothal-isopropyl, tecnazen, biphenyl, bronopol, diphenylamine, mildiomycin, oxincopper, prohexadione calcium, N- (cyclopropylmethoxyimino-(6-difluoromethoxy-2,3-difluoro-phenyl)- methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluormethyl-4-(3-trimethylsilanyl-propoxy)-phenyl)-N-ethyl-N-methylformamidine and N'-(5-difluormethyl-2-methyl-4-(3-trimethylsilanyl-propoxy)-phenyl)-N-ethyl-N-methyl formamidine.

In one embodiment, the composition includes a liquid fertilizer. The term "liquid fertilizer" refers to a fertilizer in a fluid or liquid form containing various ratios of nitrogen, phosphorous and potassium (for example, but not limited to, 10% nitrogen, 34% phosphorous and 0% potassium) and micronutrients, commonly known as starter fertilizers that are high in phosphorus and promote rapid and vigorous root growth. The liquid fertilizer is preferably present in a concentration of from 95.00% by weight to 99.99% by weight based upon the total weight of all components in the formulation.

Optionally, the composition further includes at least one of an anti-freeze agent, an anti-foam agent and a biocide. These formulation components are well-known in the agrochemical arts. In one embodiment, the anti-freeze agent is a polyalkylene glycol, preferably propylene glycol, and when present, is present in an amount from about 5% to about 9% by weight of the total of all components in the composition. In an embodiment, the anti-foam agent is an alkylcyclotetrasiloxane, preferably an octamethylcyclo-tetrasiloxane silicone emulsion, for example, DOW CORNING® AF Emulsion or DOWCORNING® ANTIFOAM C Emulsion (Dow Corning Corporation). When present, the anti-foam agent is present in an amount of from about 0.001% to about 1% by weight of all the components in the total formulation. The preservative can be an isothiazolone or a mixture of isothiazolones, for example, KATHON® CG/ICP preservative or LEGEND® MK preservative (Rohm and Haas Corporation) or PROXEL™ BR preservative (Avecia Corporation). When present, the preservative is present in an amount of from about 0.001% to about 1% by weight of the total of all components in the formulation.

The present invention also encompasses a method of controlling unwanted insects and providing nutrients to plants, the method comprising applying to an area infested with such insects and containing such plants an effective amount of a liquid fertilizer in combination with one of the compositions of this invention.

The present invention also discloses a process for preparing a composition of this invention comprising dispersing the bifenthrin in a mixture of water with the dispersant; and optionally an anti-freeze agent, an anti-foam agent and a biocide, wet milling the mixture and adding attapulgite. The process may further comprise adding the resultant mixture to a liquid fertilizer.

As used in this specification and unless otherwise indicated the term "insecticide" refers to a molecule or combination of molecules that repels, retards, or kills insects, and can be used for crop protection, edifice protection, turf protection, or protection of a person. The term "ambient temperature" as utilized herein shall mean any suitable temperature found in a laboratory or other working environment, and is generally not below about 15°C nor above about 30 °C.

The compositions of the present invention are further illustrated by the examples below. The examples serve to illustrate the invention.

### EXAMPLE 1

This example illustrates the preparation of a composition (Composition A) that includes bifenthrin and formononetin.

A mixture of 40.34 grams of propylene glycol, 23.36 grams of tridecyl alcohol ethoxylated phosphate potassium salt (Dextrol OC-180 available from Dexter Chemical Corp. in Bronx, N.Y.), 25.48 grams of C₉-C₁₁ alkyl d-glucopyranoside (Agnique 9116 available from Cognis Corporation in Cincinnati, Ohio), 0.64 gram of polydimethylsiloxane (DowCorning AF available from Dow Corning Corp. in Midland, Mich.), 2.12 grams of lignosulfonate, sodium salt (Reax 88B available from MeadWestcaco in Charleston South Carolina) and 0.42 gram of an isothiazodone compound (Kathon CG/ICP available from Rohm and Haas Co. in Philadelphia, Pa.) in 220.2 grams of dionized water was stirred until all the components dissolved. Technical bifenthrin (49.52 grams, 98% purity) was added and dispersed throughout the mixture with a high-shear homoginizer. Formononetin (24.55 grams, 99% purity, available as Myconate HB from Plant Health Care, Inc., Pittsburg, PA) was added and the mixture subjected to high-shear homogenization. The resultant mixture was milled to less than 7 microns and then 38.22 grams of attapulgite clay (Attaflow FL available from Englehard in Iselin, N.J.) was added and the mixture homogenized using a high-shear homogenizer.

### Example 2

This example illustrates the preparation of a composition (Composition B) that includes bifenthrin and a lipo-chitooligosaccharide (LCO) promoter.

A mixture of 38.0 grams of propylene glycol, 22.0 grams of tridecyl alcohol ethoxylated phosphate potassium salt (Dextrol OC-180 available from Dexter Chemical Corp.), 24.0 grams of C₉-C₁₁ alkyl d-glucopyranoside (Agnique 9116 available from Cognis Corporation), 0.15 gram of polydimethylsiloxane (DowCorning AF available from Dow Corning Corp.), 2.0 grams of lignosulfonate, sodium salt (Reax 88B available from MeadWestcaco) and 0.4 gram of an isothiazodone compound (Kathon CG/ICP available from Rohm and Haas Co.) was stirred until all the components dissolved. Technical bifenthrin (70.0 grams, 98% purity) was added and dispersed throughout the mixture with a high-shear homoginizer. A Lipo-chitooligosaccharide (207.0 grams of Ratchet™ Liquid LCO Promoter Technology® ACTIVE: 4 x 10-7% lipo-chitooligosaccharide (LCO) formulated for foliar applications available from Novozymes®) was added and the mixture subjected to high-shear homogenization. The resultant mixture was milled to less than 7 microns and then 36.0 grams of attapulgite clay (Attaflow FL available from Englehard) was added and the mixture homogenized using a high-shear homogenizer.

### Example 3

### Comparative Stability Studies

The physical stability of Compositions A and B were tested by mixing the composition with an 11% nitrogen-37% phosphorous-0% potassium liquid fertilizer at a 5% to 95 % weight ratio and observing the mixture's physical stability in a 500 milliliter/50 cm chromatography column. The stability of Compositions A and B was compared with that of a traditional composition in the art, an Emulsifiable Concentrate (EC) of bifenthrin (Talstar® 2 EC, available from FMC Corporation) that was mixed at a 5% to 95% by weight with an 11-37-0 liquid fertilizer. To a glass cylinder were added 95 grams of an 11-37-0 liquid fertilizer and 5 grams of the Example composition or Talstar® 2 EC. The glass cylinder was sealed and inverted 30 times to mix the components. The test mixture was poured into a glass chromatography column and a 10 ml sample was withdrawn at 10 minute intervals for one hour. The samples were analyzed by HPLC to determine the amount of bifenthrin in each sample in parts per million. Table 1 contains the results of the stability test.

**Table 1. Physical Stability of Compositions Containing Bifenthrin In High Phosphate Liquid Fertilizer**

| Test Composition | Concentration of Bifenthrin (ppm) In Samples Taken At The Elapsed Time (minutes) | | | | | | |
|---|---|---|---|---|---|---|---|
| | 0 | 10 | 20 | 30 | 40 | 50 | 60 |
| Composition A | 6474 | 6446 | 6363 | 6446 | 6404 | 6506 | 7384 |
| Composition B | 4189 | 4120 | 4007 | 3835 | 3462 | 3252 | 3202 |
| Talstar® 2 EC | 9427 | 7557 | 7052 | 5630 | 4270 | 2984 | 2757 |

The test data provided in Table 1 indicates that Compositions A and B are homogenous throughout the test indicating good physical stability, whereas Talstar® 2 EC is not homogenous and has poor physical stability.

## Claims

1. A composition comprising:
a) bifenthrin;
b) at least one plant growth promoter selected from the group consisting of lipo-chitooligosaccharides and formononetin;
c) attapulgite; and
d) a dispersant consisting of a lignosulfonate, tridecyl alcohol ethoxylated phosphate potassium salt and an alkylpolyglycoside.

2. The composition of claim 1, the composition comprising:
a) from 15% to 25% of bifenthrin;
b) from 15% to 25% of at least one plant growth promoter;
c) from 1% to 20% of attapulgite; and
d) from 0.2% to 20% of the dispersant;
wherein all % are % by weight based upon the total weight of all components in the composition.

3. The composition of claim 1, wherein said plant growth promoter is a lipochitooligosaccharide.

4. The composition of claim 2, wherein said plant growth promoter is formononetin.

5. The composition of claim 1 further comprising a liquid fertilizer.

6. The composition of claim 1, further comprising at least one of an anti-freeze agent, an anti-foam agent and a biocide.

7. A method of improving the growth of a plant comprising applying a plant growth effective amount of the composition of claim 1 to plant propagation material.

8. The method of claim 7, wherein the plant propagation material is selected from the group consisting of seeds, spores, bulbs, cuttings, sets, rhizomes, tubers, meristem tissue, plant cells, and combinations thereof.

9. The method of claim 8, wherein the plant propagation material comprises at least one seed.

10. The method of claim 7, wherein the composition is applied at a rate ranging from 0.1g/ha to 1000g/ha.

11. The method of claim 7, wherein the plant is selected from the group consisting of corn, cotton, soybean, sunflower, wheat, barley, rye, oat, and oilseed rape.

## Patentansprüche

1. Eine Zusammensetzung, die Folgendes beinhaltet:
a) Bifenthrin;
b) mindestens einen Pflanzenwachstumsförderer, ausgewählt aus der Gruppe, bestehend aus Lipochitooligosacchariden und Formononetin;
c) Attapulgit; und
d) ein Dispergiermittel, bestehend aus einem Ligninsulfonat, tridecylalkoholethoxyliertem Phosphatkaliumsalz und einem Alkylpolyglycosid.

2. Zusammensetzung gemäß Anspruch 1, wobei die Zusammensetzung Folgendes beinhaltet:
a) zu 15 % bis 25 % Bifenthrin;
b) zu 15 % bis 25 % mindestens einen Pflanzenwachstumsförderer;
c) zu 1 % bis 20 % Attapulgit; und
d) zu 0,2 % bis 20 % des Dispergiermittels;
wobei alle % Gew.-% sind, bezogen auf das Gesamtgewicht aller Komponenten in der Zusammensetzung.

3. Zusammensetzung gemäß Anspruch 1, wobei der Pflanzenwachstumsförderer ein Lipochitooligosaccharid ist.

4. Zusammensetzung gemäß Anspruch 2, wobei der Pflanzenwachstumsförderer Formononetin ist.

5. Zusammensetzung gemäß Anspruch 1, die ferner ein flüssiges Düngemittel beinhaltet.

6. Zusammensetzung gemäß Anspruch 1, die ferner mindestens eines von einem Gefrierschutzmittel, einem Schaumhemmmittel und einem Biozid beinhaltet.

7. Ein Verfahren zum Verbessern des Wachstums einer Pflanze, beinhaltend das Aufbringen einer für das Pflanzenwachstum wirksamen Menge der Zusammensetzung gemäß Anspruch 1 auf Pflanzenvermehrungsmaterial.

8. Verfahren gemäß Anspruch 7, wobei das Pflanzenvermehrungsmaterial aus der Gruppe ausgewählt ist, die aus Samen, Sporen, Zwiebeln, Ablegern, Setzlingen, Rhizomen, Knollen, Teilungsgewebe, Pflanzenzellen und Kombinationen davon besteht.

9. Verfahren gemäß Anspruch 8, wobei das Pflanzenvermehrungsmaterial mindestens einen Samen beinhaltet.

10. Verfahren gemäß Anspruch 7, wobei die Zusammensetzung in einem Verhältnis im Bereich von 0,1 g/ha bis 1000 g/ha aufgebracht wird.

11. Verfahren gemäß Anspruch 7, wobei die Pflanze aus der Gruppe ausgewählt ist, die aus Mais, Baumwolle, Sojabohne, Sonnenblume, Weizen, Gerste, Roggen, Hafer und Raps besteht

## Revendications

1. Une composition comprenant :
a) de la bifenthrine ;
b) au moins un stimulateur de croissance de plante sélectionné dans le groupe constitué des lipo-chitooligosaccharides et de la formononétine ;
c) de l'attapulgite ; et
d) un dispersant consistant en un lignosulfonate, un sel de phosphate de potassium éthoxylé par de l'alcool tridécylique et un alkylpolyglycoside.

2. La composition de la revendication 1, la composition comprenant :
a) de 15 % à 25 % de bifenthrine ;
b) de 15 % à 25 % d'au moins un stimulateur de croissance de plante ;
c) de 1 % à 20 % d'attapulgite ; et
d) de 0,2 % à 20 % du dispersant ;
dans laquelle tous les % sont des % en poids rapporté au poids total de tous les constituants dans la composition.

3. La composition de la revendication 1, dans laquelle ledit stimulateur de croissance de plante est un lipo-chitooligosaccharide.

4. La composition de la revendication 2, dans laquelle ledit stimulateur de croissance de plante est la formononétine.

5. La composition de la revendication 1 comprenant en outre un fertilisant liquide.

6. La composition de la revendication 1, comprenant en outre au moins un agent antigel, un agent anti-mousse et un biocide.

7. Une méthode d'amélioration de la croissance d'une plante comprenant l'application d'une quantité efficace permettant la croissance de la plante de la composition de la revendication 1 sur un matériel de multiplication de plantes.

8. La méthode de la revendication 7, dans laquelle le matériel de multiplication de plantes est sélectionné dans le groupe constitué de graines, de spores, de bulbes, de boutures, de nouaisons, de rhizomes, de tubercules, de tissu méristème, de cellules de plantes, et de combinaisons de ceux-ci.

9. La méthode de la revendication 8, dans laquelle le matériel de multiplication de plantes comprend au moins une graine.

10. La méthode de la revendication 7, dans laquelle la composition est appliquée à un taux compris dans la gamme allant de 0,1 g/ha à 1 000 g/ha.

11. La méthode de la revendication 7, dans laquelle la plante est sélectionnée dans le groupe constitué du mais, du coton, de la graine de soja, du tournesol, du blé, de l'orge, du seigle, de l'avoine, et du colza oléagineux.
